# EUROPEAN PATENT APPLICATION

(11) **EP 4 715 345 A1**
(43) Date of publication of application: **25.03.2026**
(21) Application number: 25197143.8
(22) Date of filing: 20.08.2025
(51) Int. Cl.: G01G 19/414

(54) **PRODUCT PROCESSING APPARATUS**

(30) Priority: 20.09.2024 JP 2024164014
(71) Applicant: Ishida Co., Ltd., Kyoto-shi Kyoto 606-8392 (JP)
(72) Inventor: TATEISHI, Keita, Ritto-shi, Shiga, 520-3026 (JP); NONOHARA, Yasunari, Ritto-shi, Shiga, 520-3026 (JP); NAKAGAWA, Yuji, Ritto-shi, Shiga, 520-3026 (JP)
(74) Representative: Gill Jennings & Every LLP

(57) **Abstract**

A product processing apparatus (1) includes: a camera (11) that captures an image of a product (100) placed on a product placement part (10) and generates a captured image; a display (12) that displays various types of information; a controller (13) that estimates a candidate (C) of the product on a basis of the captured image and display the candidate (C) on the display (12); and a label printer (14) that prints product information about the product (100) on a label. When one product is specified by an operation of an operator on a basis of the candidate (C) displayed on the display (12), the controller (13) causes the label printer (14) to print product information about the specified one product, and after the one product is specified, when the controller (13) determines that a candidate (C) estimated on a basis of a captured image of another product is same as the one product, the controller (13) causes the label printer (14) to print product information about the other product by using the product information about the one product.

## Description

### TECHNICAL FIELD

The present invention relates to a product processing apparatus.

### BACKGROUND ART

As disclosed in JP 2023-136801 A, a product processing apparatus equipped with AI has been conventionally known.

In the product processing apparatus, when an operator places a product on a weighing pan, the AI specifies the product substantially at the same time (about 0.5 seconds) as the weight of the product is determined, and the product information of the product is displayed on the display unit.

Then, when the operator removes the product on the weighing pan, the controller causes a label printer to issue a pricing label by using the removal as a trigger.

Here, in the product processing apparatus, in a case where the AI estimates the product, product candidates are displayed in a list in descending order of probability. Therefore, even if the AI estimation is wrong, if the operator selects a correct product from the product candidates and then unloads the product from the weighing pan, a pricing label of the selected product is issued.

Since such a product processing apparatus is a scale using a method of placing a product packed in a container on a weighing pan and assigning a value, there is no problem if an operation is performed according to the procedure. However, there may be a problem in a case where the product processing apparatus is brought into a backyard, and an operation of placing and unloading a large number of products of the same type one after another on the weighing pan is repeated to assign the value.

For example, in the automatic mode in which a pricing label is automatically issued when a loaded product is unloaded from a weighing pan, when the product is removed from the weighing pan without confirming that the product name specified by the AI is wrong, there is a problem that a pricing label with a wrong product name is issued.

In order to cope with such a problem, such a product processing apparatus has a manual mode in which a pricing label is issued when a print key is operated. In a case where the mode is switched to the manual mode, a product name specified by the AI is displayed on the display screen, and when the print key is pressed after an operator confirms the product name or when the print key is operated after a correct product is selected from a product list, a pricing label is issued.

### SUMMARY OF THE INVENTION

However, in the product processing apparatus described above, in a case where the products of the same type are repeatedly placed on the weighing pan one after another and unloaded, it is necessary to operate the print key every time, and thus there is a problem that the workability is poor.

In addition, in such a manual mode or automatic mode, in a case where it is necessary to select a correct product from the listed products, even if the same type of product is placed on the weighing pan next time, it is necessary to select a correct product from the listed products in the same manner. Therefore, in a case where the same type of products are weighed one after another and are valued, there is a problem that performing the product selection operation every time becomes troublesome until the learned model is updated.

Therefore, the present invention has been made in view of the above problem. An object of the present invention is to provide a product processing apparatus capable of avoiding deterioration of workability even in a case where operation of sequentially placing and unloading products of the same type on a weighing pan is repeated.

A product processing apparatus according to an embodiment is summarized by including: a camera that captures an image of a product placed on a product placement part and generates a captured image; a display that displays various types of information; a controller that estimates a candidate of the product on a basis of the captured image and display the candidate on the display; and a label printer that prints product information about the product on a label, wherein when one product is specified by an operation of an operator on a basis of the candidate displayed on the display, the controller causes the label printer to print product information about the specified one product, and after the one product is specified, when the controller determines that a candidate estimated on a basis of a captured image of another product is same as the one product, the controller causes the label printer to print product information about the other product by using the product information about the one product.

According to the present invention, it is possible to provide a product processing apparatus capable of avoiding deterioration of workability even in a case where operation of sequentially placing and unloading products of the same type on a weighing pan is repeated.

### BRIEF DESCRIPTION OF THE DRAWINGS

FIG. 1 is a diagram illustrating an example of an overall configuration of a product processing apparatus 1 according to a first embodiment; and
FIGS. 2A and 2B are diagrams illustrating examples of a display screen of a display unit 12 of the product processing apparatus 1 according to the first embodiment.

### DETAILED DESCRIPTION

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

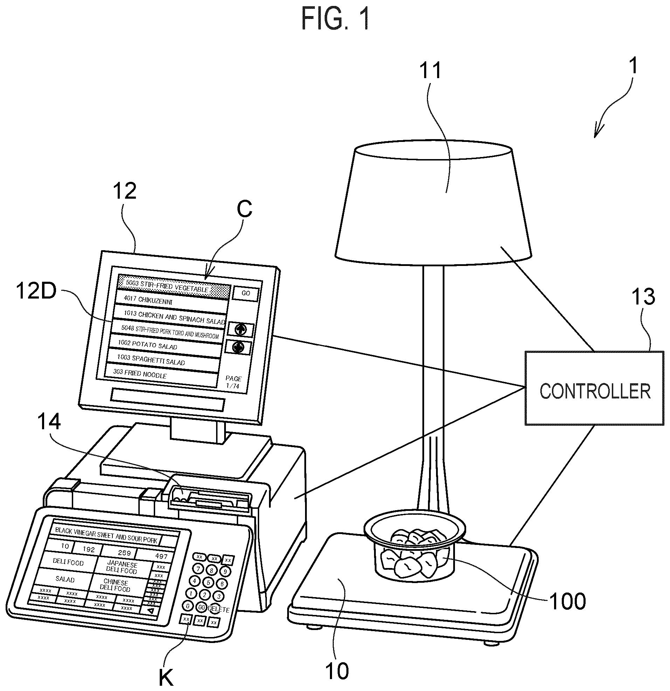

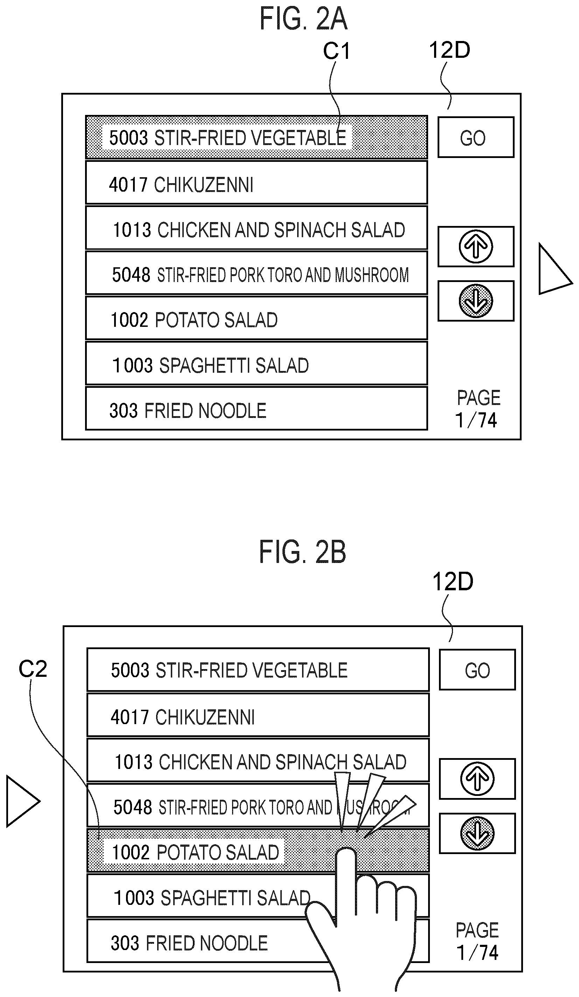

Hereinafter, a product processing apparatus 1 according to a first embodiment of the present invention will be described with reference to FIGS. 1, 2A, and 2B.

FIG. 1 is a diagram illustrating an example of an overall configuration of the product processing apparatus 1 according to the present embodiment, and FIGS. 2A and 2B are diagrams illustrating examples of a display screen of a display unit 12 of the product processing apparatus 1 according to the present embodiment.

As illustrated in FIG. 1, the product processing apparatus 1 according to the present embodiment includes a camera 11, the display unit 12, a controller 13, and a label printer 14.

As illustrated in FIG. 1, the camera 11 is stored in a shade and captures an image of a product 100 placed on a product placement part 10 from above to generate a captured image. The product placement part 10 is a weighing pan for weighing the loaded product 100.

The display unit 12 displays various types of information. As illustrated in FIGS. 1, 2A, and 2B, the display unit 12 displays an estimated product candidate C on a display screen (display) 12D in response to an instruction from the controller 13.

The label printer 14 prints product information related to a product on a label. For example, the product information includes the product name, price, processing date and time, expiration date, weight of the product, and the like.

The controller 13 estimates the product candidate C on the basis of the captured image captured by the camera 11, and causes the display unit 12 to display the estimated product candidate C.

For example, the controller 13 stores a learned model for each product 100, and estimates the product candidate C from the captured image using this model. In addition, the product candidate C may be estimated in cooperation with a learned model stored in a cloud server (not illustrated). In such a case, the controller 13 transmits the captured image to the cloud server. The cloud server estimates the product candidate C on the basis of the captured image acquired from the controller 13 and the stored learned model, and transmits the product candidate C to the controller 13.

Here, the cloud server may also transmit the estimation accuracy of each of the product candidates C to the controller 13. In such a case, the controller 13 may instruct the display unit 12 to display the product candidates C from the top in descending order of the estimation accuracy.

In addition, the cloud server periodically performs machine learning using a captured image of a product and product information (teacher data) to update the learned model.

When one product is specified by the operation of the operator on the basis of the product candidate C displayed on the display unit 12, the controller 13 causes the label printer 14 to print product information about the specified one product.

In addition, when determining that the candidate estimated on the basis of a captured image of another product is the same as the one product after the one product is specified, the controller 13 causes the label printer 14 to print product information about the other product using the product information about the one product.

Hereinafter, an example of an operation when the product processing apparatus 1 prints product information on a label will be described with reference to FIGS. 2A and 2B.

First, when an operator places a first product 100 (one product) on the product placement part 10, the camera 11 captures an image of the product 100, and inputs the captured image to the controller 13. Subsequently, the controller 13 inputs the captured image to the learned model to estimate the product candidate C, and displays the estimation result as the product candidate C on the display screen 12D of the display unit 12. Here, since the estimation results are displayed in descending order from the one with the highest probability, in the example of FIG. 2A, "stir-fried vegetable C1" is highlighted at the top as the product with the highest probability among the product candidates C.

Second, when the operator determines that the first product 100 placed on the product placement part 10 is "stir-fried vegetable C1" and that it matches "stir-fried vegetable C1" estimated by the controller 13, the operator unloads the product 100 from the product placement part 10 in the automatic mode, while operates the print key K in the manual mode. Then, the controller 13 determines the first product 100 as "stir-fried vegetable C1", and then calculates the price on the basis of the weight of product 100 placed on the product placement part 10.

Third, the controller 13 reads out the confirmed product information of "stir-fried vegetable C1" from the product master (not illustrated), and sets the product information together with the weight and the price in the label printer 14. Accordingly, the label printer 14 prints the product information and the weight/price related to "stir-fried vegetable C1" on a label and issues it.

Fourth, the operator picks up the issued pricing label and attaches the label to the product 100, and then places the second product 100 (another product) on the product placement part 10. Then, a captured image of the product 100 acquired by the camera 11 is input to the controller 13, and at the same time, the weighing of the second product 100 is executed.

Fifth, the controller 13 estimates the product candidate C on the basis of the input captured image. In this case, when the estimated second product 100 is "stir-fried vegetable C1" that is the same as the first product 100, the controller 13 immediately causes the label printer 14 to print the product information about the second product 100 (another product) by using the product information about the first product 100 (one product).

Specifically, since the product information about the first product 100 has already been set in the label printer 14, the controller 13 calculates the price on the basis of the weight of the second product 100 newly placed on the product placement part 10, and sets the calculated price and the newly acquired weight in the label printer 14 as print information of the second product.

Sixth, the label printer 14 adds the weight and the price of the second product 100 set later, to the product information of "stir-fried vegetable C1" for the first product 100 (one product) that has already been set, and prints the information on the label. In such a case, even in the manual mode, the operator can issue the pricing label without operating (pressing) the print key.

In the second operation, when the operator determines that the product 100 placed on the product placement part 10 is not "stir-fried vegetable C1" but "potato salad C2" illustrated in FIG. 2B, the operator selects "potato salad C2" in FIG. 2B on the display screen 12D, and then unloads the product 100 from the product placement part 10 in the automatic mode, while operates the print key K in the manual mode, so that the product 100 placed on the product placement part 10 is determined as "potato salad C2".

Then, when the second product 100 placed on the product placement part 10 is also "potato salad C2", the controller 13 immediately issues a label on which "potato salad C2" is printed, which is to be attached to the second product 100, as described above.

In addition, after the first product 100 (one product) is specified as "stir-fried vegetable C1" and the label of "stir-fried vegetable C1" is issued on the basis thereof, when the product candidate C estimated on the basis of the captured image of the second product 100 (another product) is "potato salad C2" and this is determined by the operation of the operator, the controller 13 reads the product information about the potato salad C2 from the product master and sets the product information in the label printer 14. Subsequently, when the second product is unloaded from the product placement part 10 or when the print key is operated (pressed), the controller 13 calculates the weight and price of the second product 100 and sets the weight and price in the label printer 14.

According to the above configuration, after the first product 100 on the product placement part 10 is specified and the product information about the specified first product 100 is printed on the label, in a case where the second product 100 placed on the product placement part 10 is a product of the same type as the first product 100, a label of the same type is automatically issued. Therefore, the product 100 of the same type can be sequentially placed on the product placement part 10, and the pricing label can be repeatedly issued.

Furthermore, after the first product 100 (one product) is specified using the learned model, the controller 13 may compare the feature amount extracted from the captured image of the one product with the feature amount extracted from the captured image of another product placed second to determine whether or not the one product and the other product are the same.

According to such a configuration, even in a case where estimation of a product by the learned model is not satisfactory, for example, even in a case where a correct product has to be selected from the listed products as illustrated in FIG. 2B, when a correct product is specified by product selection, it is possible to immediately determine whether the two products are the same or different by comparing the feature amount of the stored correct product with the feature amount acquired from another product placed later, by storing the feature amount of the correct product.

According to the present embodiment, even in a case where an operation of placing and unloading the products of the same type on the weighing pan one after another is repeated, it is possible to issue the pricing labels one after another and avoid deterioration in the pricing operation for the products of the same type.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

- 1: Product processing apparatus
- 10: Product placement part
- 11: Camera
- 12: Display
- 12D: Display screen
- 13: Controller
- 14: Label printer
- 100: Product
- C: Candidate of product
- K: Print key

## Claims

1. A product processing apparatus comprising:
a camera that captures an image of a product placed on a product placement part and generates a captured image;
a display that displays various types of information;
a controller that estimates a candidate of the product on a basis of the captured image and display the candidate on the display; and
a label printer that prints product information about the product on a label, wherein
when one product is specified by an operation of an operator on a basis of the candidate displayed on the display, the controller causes the label printer to print product information about the specified one product, and
after the one product is specified, when the controller determines that a candidate estimated on a basis of a captured image of another product is same as the one product, the controller causes the label printer to print product information about the other product by using the product information about the one product.

2. The product processing apparatus according to claim 1, wherein
the controller determines whether or not the candidate estimated on the basis of the captured image of the other product is the same as the one product by comparing a feature amount extracted from a captured image of the one product with a feature amount extracted from the captured image of the other product.

3. The product processing apparatus according to claim 1 or 2, wherein
even in a mode in which it is necessary to operate a print key in order to print the product information about the product on the label, when the controller determines that the candidate estimated based on the captured image of the other product is the same as the one product, the controller causes the label printer to print the product information about the other product without operating the print key.
